# DEMANDE DE BREVET EUROPEEN

(11) **EP 2 375 318 A1**
(43) Date de publication de la demande: **12.10.2011**
(21) Numéro de dépôt: 11160234.8
(22) Date de dépôt: 29.03.2011
(51) Int. Cl.: G06F 3/048, G06F 1/16, G06F 17/30

(54) **Procédé de visualisation et de navigation sur un écran d'un terminal**

(30) Priorité: 08.04.2010 FR 1052680
(71) Demandeur: FRANCE TELECOM, 75015 Paris (FR)
(72) Inventeur: Ledunois, Valérie, 35890, Laille (FR); Cazoulat Renaud, 35000, Rennes (FR)
(74) Mandataire: Le Saux, Gaël

(57) **Abrégé**

L'invention concerne un procédé de visualisation et de navigation sur un écran d'un terminal, ledit terminal comprenant un espace d'affichage sur lequel est affiché une première pluralité d'objets graphiques représentatifs d'objets applicatifs, les dits objets étant regroupés en sous-ensembles.

Selon l'invention un tel procédé comprend au moins une itération des étapes suivantes:
- une étape d'obtention d'au moins une donnée d'inclinaison dudit terminal par rapport à un plan de référence ;
- une étape de déplacement en continu des sous-ensembles sur ledit espace d'affichage en fonction de ladite donnée d'inclinaison obtenue, tant que ladite donnée d'inclinaison excède un seuil prédéterminé.

## Description

### 1 DOMAINE DE L'INVENTION

Le domaine de l'invention est celui de la navigation à travers des applications et des fichiers disponibles au sein de terminaux. Plus précisément l'invention concerne la navigation et la visualisation d'éléments, sous la forme d'une représentation (représentative chacune d'une application ou d'un fichier) sur un écran, notamment de taille réduite, par exemple pour des terminaux, tels que les téléphones mobiles ou les assistants personnels.

### 2 SOLUTIONS DE L'ART ANTERIEUR

### 2.1 1 Art antérieur

La grande majorité des terminaux possèdent des caractéristiques techniques leur permettant de faire fonctionner de nombreuses applications. Ces capacités permettent également d'embarquer des applications de plus en plus nombreuses : lecteurs multimédia, lecteurs de courrier électroniques, calendriers, agendas, réveils, lecteurs de documents, applications de connectivités, etc. Cependant les fonctionnalités de navigation au sein de ces applications sont hétérogènes et complexes, en particulier du fait de la taille réduite des écrans au regard du nombre d'applications installées.

De ce fait, les fabricants de terminaux proposent l'accès à ces nouvelles applications sous la forme de pages d'icônes. Ces applications sont généralement accessibles en faisant défiler, par exemple à l'aide d'un écran tactile, les pages d'icônes. La même démarche est utilisée pour la représentation des fichiers, qui sont également représentés sous la forme d'icônes.

Dans la suite de cet exposé, une application ou un fichier associé à une icône sera appelée « objet applicatif ». Les icônes qui représentent un objet applicatif, seront également appelées des objets graphiques.

Le principe général retenu par tous les fabricants de terminaux est de proposer un « bureau » où est disposé un ensemble d'icônes. Le nombre d'icônes affiché est en général limité. Quand le terminal possède beaucoup d'applications et de fichiers, l'utilisateur doit dans un premier temps naviguer à travers les icônes représentatives jusqu'à trouver celle qu'il cherche. Quand il sélectionne l'icône en question, le terminal propose alors une liste d'applications ou de fichiers accessibles. Quand cette liste est conséquente, seuls quelques-uns des premiers éléments de la liste sont affichés. L'utilisateur doit alors faire défiler cette liste pour retrouver l'application ou le fichier souhaité.

### 2.2 Inconvénients de l'art antérieur

Un inconvénient de cette technique de l'art antérieur est qu'il est nécessaire, pour l'utilisateur, d'utiliser un doigt ou un stylet pour faire défiler les pages d'icônes qui sont représentées sur l'écran du terminal. Un terminal actuel représentant environ douze icônes par page, lorsque l'utilisateur possède par exemple quarante huit applications, il y a quatre pages d'icônes représentant ces applications et pour pouvoir accéder à l'une d'elles, l'utilisateur doit potentiellement faire défiler quatre pages.

Un autre inconvénient de cette technique de l'art antérieur est que l'ordre des icônes peut évoluer au cours du temps. Cela signifie qu'une icône courante qui est positionnée sur la première page d'icônes restituée sur le terminal peut être déplacée lorsqu'une nouvelle application ou une nouvelle icône est positionnée au sein de l'ensemble des icônes du terminal. Ainsi, l'icône courante peut être positionnée en deuxième page.

Or, on sait que lors d'une utilisation courante, l'utilisateur va mémoriser, l'emplacement de l'icône, de sorte qu'il n'est pas très aisé pour lui de retrouver cette icône une fois que son emplacement a été modifié à la suite de l'insertion d'une autre icône.

### 3 RESUME DE L'INVENTION

L'invention ne présente pas ces inconvénients. En effet, l'invention concerne un procédé de visualisation et de navigation sur un écran d'un terminal, ledit terminal comprenant un espace d'affichage sur lequel est affiché une première pluralité d'objets graphiques représentatifs d'objets applicatifs, les dits objets étant regroupés en sous-ensembles, procédé caractérisé en ce qu'il comprend :
- une étape d'obtention d'au moins une donnée d'inclinaison dudit terminal par rapport à un plan de référence ;
- une étape de déplacement en continu des sous-ensembles sur ledit espace d'affichage en fonction de ladite donnée d'inclinaison obtenue, tant que ladite donnée d'inclinaison excède un seuil prédéterminé.

Selon l'invention, ladite étape de déplacement en continu comprend au moins une itération des étapes suivantes :
- une étape d'obtention d'au moins une donnée d'inclinaison dudit terminal par rapport à un plan de référence ;
- une étape de sélection, parmi ladite première pluralité d'objets graphiques affichée, d'au moins un premier sous-ensemble d'objets graphiques à déplacer, en fonction de ladite donnée d'inclinaison obtenue ;
- une étape de sélection, parmi une deuxième pluralité d'objets graphiques, d'au moins un deuxième sous-ensemble d'objets graphiques à afficher, en fonction de ladite donnée d'inclinaison obtenue ;
- une étape d'affichage dudit au moins un premier sous ensemble et dudit au moins un deuxième sous ensemble par déplacement en continu des objets graphiques desdits premier et deuxième sous-ensembles sur ledit espace d'affichage en fonction de ladite donnée d'inclinaison obtenue.

Ainsi, à la différence des techniques de l'art antérieur qui utilisent un doigt ou un stylet pour transiter d'une page d'objets graphiques (les icônes d'applications ou de fichiers) à une autre, l'invention permet de réaliser cette transition de manière continue, en inclinant le terminal par rapport à un plan de référence.

Par rapport aux techniques de l'art antérieur, la transition est réalisée en continu, c'est-à-dire que les icônes ne défilent pas par page, mais par sous-ensembles de la pluralité d'icônes à afficher. Un sous-ensemble, tel que présenté, peut prendre plusieurs configurations comme cela est explicité par la suite en relation avec des caractéristiques particulières de l'invention.

Selon une caractéristique particulière de l'invention, ledit procédé comprend en outre une étape d'insertion, au sein de ladite deuxième pluralité d'objets graphiques, d'au moins certains objets graphiques dudit au moins un premier sous-ensemble d'objets graphiques préalablement déplacé.

Ainsi, l'invention permet de circulariser les objets graphiques à afficher.

Selon une caractéristique particulière, ledit procédé comprend en outre une étape de transformation d'une représentation initiale d'au moins un objet graphique en une représentation modifiée lorsque le déplacement dudit au moins un objet graphique provoque son affichage dans une zone prédéterminée dudit espace d'affichage.

Ainsi, à la différence des techniques de l'art antérieur, l'invention ne permet pas seulement le déplacement des objets graphiques de manière continue, mais également une modification de la représentation de l'objet graphique. Une telle modification peut avantageusement être utilisée pour fournir une information dite de premier niveau, sans qu'il soit nécessaire de lancer l'application en question.

Selon un mode de réalisation particulier de l'invention, ladite étape de transformation comprend une étape de substitution de ladite représentation initiale par une représentation modifiée comprenant au moins une image d'un flux audio/vidéo auquel ledit objet graphique est associé.

Ainsi, l'invention permet par exemple d'afficher une ou plusieurs images en provenance d'un programme télévisuel lorsque l'icône représentant l'objet graphique associé à ce programme est déplacée dans la zone prédéterminée de l'espace d'affichage.

Selon un mode de réalisation particulier ladite étape de transformation comprend :
- une étape de détermination d'un nombre d'informations sélectionnées ;
- une étape de création d'un nombre équivalent d'ombres portées comprenant chacune une desdites informations sélectionnées ;
- une étape de superposition de ladite représentation initiale avec lesdites ombres portées préalablement créées, délivrant ladite représentation modifiée.

Selon un autre aspect, l'invention concerne également un dispositif de visualisation et de navigation sur un écran d'un terminal, ledit terminal comprenant un espace d'affichage sur lequel est affiché une première pluralité d'objets graphiques représentatifs d'objets applicatifs, les dits objets étant regroupés en sous-ensembles. Selon l'invention, un tel dispositif comprend :
- des moyens d'obtention d'au moins une donnée d'inclinaison dudit terminal par rapport à un plan de référence ;
- des moyens de déplacement en continu des sous-ensembles sur ledit espace d'affichage en fonction de ladite donnée d'inclinaison obtenue, tant que ladite donnée d'inclinaison excède un seuil prédéterminé.

Selon un mode de réalisation particulier, lesdits moyens de déplacement en continu des sous-ensembles comprennent :
- des moyens de sélection, parmi ladite première pluralité d'objets graphiques affichée, d'au moins un premier sous-ensemble d'objets graphiques à déplacer, en fonction de ladite donnée d'inclinaison obtenue ;
- des moyens de sélection, parmi une deuxième pluralité d'objets graphiques, d'au moins un deuxième sous-ensemble d'objets graphiques à afficher, en fonction de ladite donnée d'inclinaison obtenue ;
- des moyens d'affichage dudit au moins un premier sous ensemble et dudit au moins un deuxième sous ensemble par déplacement en continu des objets graphiques desdits premier et deuxième sous-ensembles sur ledit espace d'affichage en fonction de ladite donnée d'inclinaison obtenue.

Selon un autre aspect, l'invention concerne également un programme d'ordinateur comprenant des instructions de code de programme pour la mise en oeuvre du procédé de navigation tel que décrit précédemment, lorsque ce programme est exécuté par un processeur.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre la représentation graphique usuelle des objets graphiques;
- la figure 2a illustre le défilement des objets graphiques selon un premier mode de réalisation ;
- la figure 2b illustre le défilement des objets graphiques selon un deuxième mode de réalisation ;
- la figure 2c illustre le défilement des objets graphiques selon un troisième mode de réalisation ;
- la figure 3 illustre le plan de référence à partir duquel l'angle d'inclinaison du terminal est déterminé ;
- la figure 4 présente un terminal adapté à la mise en oeuvre du procédé de visualisation
   selon un mode de réalisation particulier ;
- la figure 5 illustre l'architecture interne du terminal selon l'invention.

### 5 DESCRIPTION DETAILLEE DE L'INVENTION

### 5.1 Rappel du principe de l'invention

Dans le cadre de la présente invention, on s'intéresse à la navigation dans les différents fichiers et applications installés au sein des terminaux avec écran en se basant sur le principe d'un défilement en continu de l'information sur l'espace d'affichage du terminal. En effet, comme cela a déjà été rappelé, bien que les terminaux, et notamment les terminaux téléphoniques, possèdent des écrans de plus en plus larges, il n'est pas possible d'afficher tous les objets graphiques à la fois sur l'écran d'un terminal.

Pour ce faire, à la différence des méthodes de l'art antérieur, qui consistent à faire défiler les objets graphiques page par page (une page comprenant généralement entre douze et vingt objets graphiques), l'invention propose de mettre en oeuvre un dispositif de mesure de l'inclinaison du terminal.

L'invention propose ainsi une nouvelle méthode d'accès aux objets applicatifs installés sur les terminaux de communications. Pour ce faire, dans au moins un mode de réalisation, on utilise un dispositif particulier qui est présent au sein du terminal : il s'agit d'un accéléromètre. Plusieurs types de terminaux disposent à ce jour d'un accéléromètre. Il s'agit d'un dispositif qui permet de mesurer l'accélération d'un objet. Certains accéléromètres permettent aussi d'assurer la fonction d'inclinomètre. Il est ainsi possible de déterminer l'inclinaison d'un terminal de communication qui embarque un accéléromètre. Cette détection de l'inclinaison est utilisée par exemple dans certains jeux pour simuler les déplacements d'un véhicule ou d'un personnage.

Il n'a cependant pas été proposé de solution pour mettre en oeuvre les accéléromètres présents au sein des terminaux de façon à faciliter la navigation dans les différents objets graphiques.

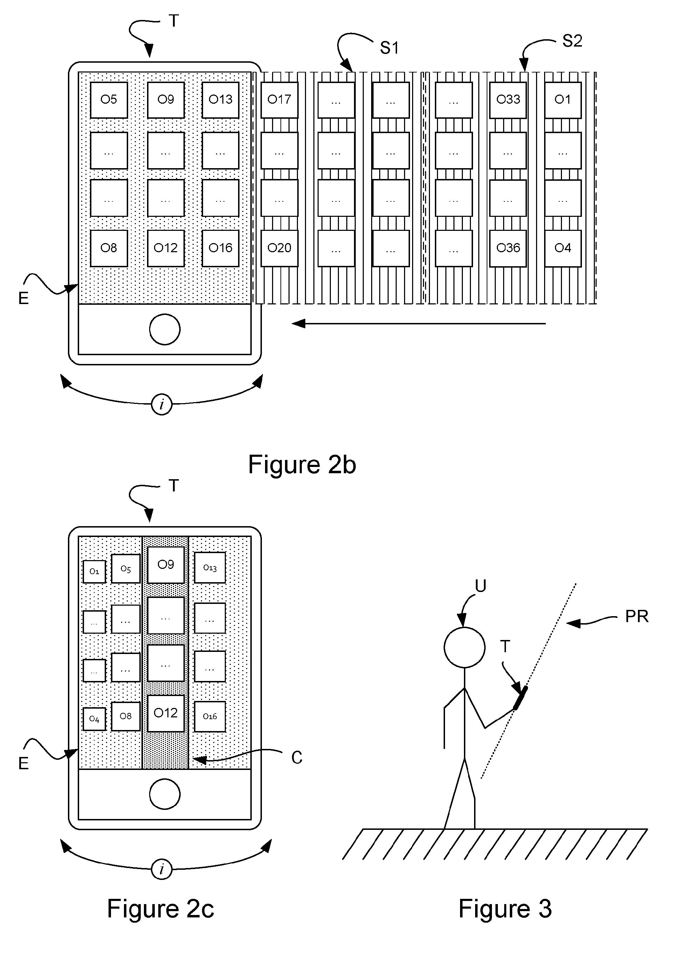

L'invention met en oeuvre une corrélation entre l'inclinaison du terminal par rapport à un plan de référence et les objets graphiques à afficher. Le plan de référence est le plan de visualisation, par l'utilisateur, de l'écran du terminal. Le plan de référence est plus particulièrement illustré en figure 3 qui est décrite par la suite.

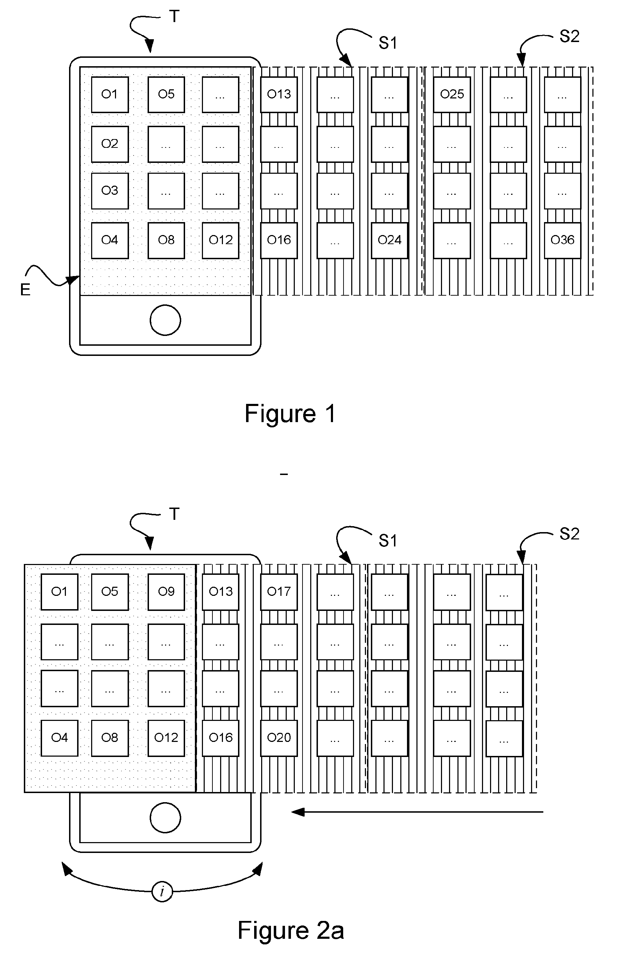

Le principe général de l'invention est présenté en relation avec les figures 1, 2a à 2c. Un terminal (T) comporte un espace d'affichage des objets graphiques (E) pouvant afficher simultanément une première pluralité d'objets graphiques, par exemple au nombre de douze objets graphiques O1 à O12. Au sein du terminal (T), plusieurs autres objets applicatifs sont installés et sont regroupés par ensembles de plusieurs objets applicatifs (S1 : 013 à 024 et S2 : 025 à 036). Dans une position courante, ces objets graphiques ne sont pas visualisables sur l'espace d'affichage des objets graphiques (E).

Selon l'invention, la visualisation de ces autres objets applicatifs s'effectue de la façon suivante :
- une étape d'obtention d'une donnée d'inclinaison (i) dudit terminal (T) par rapport à un plan de référence ;
- une étape de sélection, parmi la première pluralité d'objets graphiques affichés (O1 à 012), d'un premier sous-ensemble d'objets graphiques à déplacer (par exemple O1 à 04), en fonction de la donnée d'inclinaison obtenue ;
- une étape de sélection, parmi une deuxième pluralité d'objets graphiques (S1, S2), d'au moins un deuxième sous-ensemble d'objets graphiques à afficher (par exemple 013 à 016), en fonction de ladite donnée d'inclinaison obtenue ;
- une étape d'affichage dudit au moins un premier sous ensemble et dudit au moins un deuxième sous ensemble par déplacement en continu des objets graphiques desdits premier et deuxième sous-ensembles sur ledit espace d'affichage en fonction de ladite donnée d'inclinaison obtenue.

La figure 2a présente le cas de figure où le terminal est incliné vers la gauche. Tant que le terminal est incliné, les objets graphiques défilent. Ainsi, une nouvelle itération des étapes précédentes est réalisée si le terminal est toujours incliné à la fin de l'itération courante. Dans le mode de réalisation représenté en figure 2a, il n'y a pas de circularité des objets graphiques, de sorte que si le terminal reste en position inclinée, le défilement des objets graphiques des ensembles S1 et S2 se poursuit jusqu'à atteindre une position de blocage correspondant à l'affichage des objets graphiques 025 à 036 de l'ensemble S2, même si le terminal est toujours incliné.

Selon une caractéristique particulière de l'invention (figure 2b), les objets graphiques qui ne sont plus affichés du fait du défilement résultant de l'inclinaison du terminal sont insérés à la fin du dernier ensemble d'objets graphiques : on met donc en oeuvre une circularité, de sorte que tant que le terminal est incliné, les étapes du procédé de l'invention sont mises en oeuvre. Plus particulièrement, comme cela est illustré en figure 2b, les objets O1 à 04 ont été ajoutés à la fin de l'ensemble S2. Si le terminal continue d'être incliné, les objets 05 à 08 seront également ajoutés à la fin de l'ensemble S2.

L'invention propose donc une nouvelle méthode de navigation parmi les objets graphiques affichés par un terminal de communication, et notamment les terminaux mobiles. Le principe de l'invention a été décrit lors d'une inclinaison vers la gauche du terminal par rapport au plan de référence. Il est bien entendu que le procédé de l'invention s'applique également lorsque le terminal est incliné vers la droite par rapport au plan de référence ou encore vers le haut ou vers le bas.

Selon une caractéristique particulière de l'invention (non représentée), la donnée d'inclinaison permet de définir un angle d'inclinaison du terminal par rapport au plan de référence dans lequel celui-ci se trouvait. Cet angle d'inclinaison est utilisé, selon l'invention, pour déterminer la vitesse de défilement des objets graphiques.

Par exemple, lorsque le terminal est incliné d'un angle variant entre 5° et 15° par rapport au plan de référence, la vitesse de défilement est lente.

Lorsque le terminal est incliné d'un angle variant entre 15° et 45° par rapport au plan de référence, la vitesse de défilement est plus rapide. Par exemple, lorsque l'angle est compris entre 15° et 45°, les ensembles d'objets graphiques à déplacer comprennent un nombre d'objets graphiques plus important, par exemple huit. Ainsi, le défilement des objets graphiques est accéléré.

Lorsque le terminal est incliné d'un angle variant entre 45° et 75°, le défilement est quasiment instantané : une telle inclinaison permet par exemple d'atteindre une extrémité d'une zone d'affichage directement, sans avoir à faire défiler les différentes pages. Ceci est particulièrement avantageux quand le terminal comprend un très grand nombre d'objets graphiques affichables.

Afin de permettre une utilisation la plus naturelle possible, préalablement à la mise en oeuvre des étapes de navigation telles que décrites préalablement, le procédé de l'invention comprend une étape de déblocage de l'affichage. En effet, il n'est pas souhaitable que le procédé de l'invention soit mis en oeuvre lorsque le terminal de l'utilisateur est par exemple rangé dans un sac ou dans une poche. Pour ce faire, lorsque le terminal de l'invention est mis en veille, par exemple après une inactivité plus ou moins prolongée (par exemple de dix secondes à une minute), le procédé de l'invention est inhibé. Lorsque l'utilisateur souhaite à nouveau utiliser le terminal et naviguer au travers des objets graphiques affichés par celui-ci, il débloque le terminal. Le déblocage du terminal a, selon l'invention, la particularité de définir le plan de référence qui est destiné à servir de base au calcul de la donnée d'inclinaison utilisée par la suite pour définir l'angle d'inclinaison du terminal et accessoirement la vitesse de défilement des objets graphiques telle que décrite auparavant. Le plan de référence est défini par la position du terminal lorsque l'utilisateur le tient en main. En d'autres termes, le plan de référence n'est pas nécessairement parallèle ou perpendiculaire au sol. Le plan de référence du terminal forme plutôt, en condition habituelle d'utilisation, un angle de l'ordre de soixante dix degrés avec le plan défini par le sol, comme cela est représenté en relation avec la figure 3. L'utilisateur U tient le terminal T en main et le plan de référence PR du terminal est illustré par le segment en pointillé.

Par la suite, on présente notamment le cas d'une mise en oeuvre du procédé de l'invention pour la navigation au travers d'une sélection d'un flux de données parmi un très grand nombre de flux de données disponibles.

### 5.2 Description d'un mode de réalisation

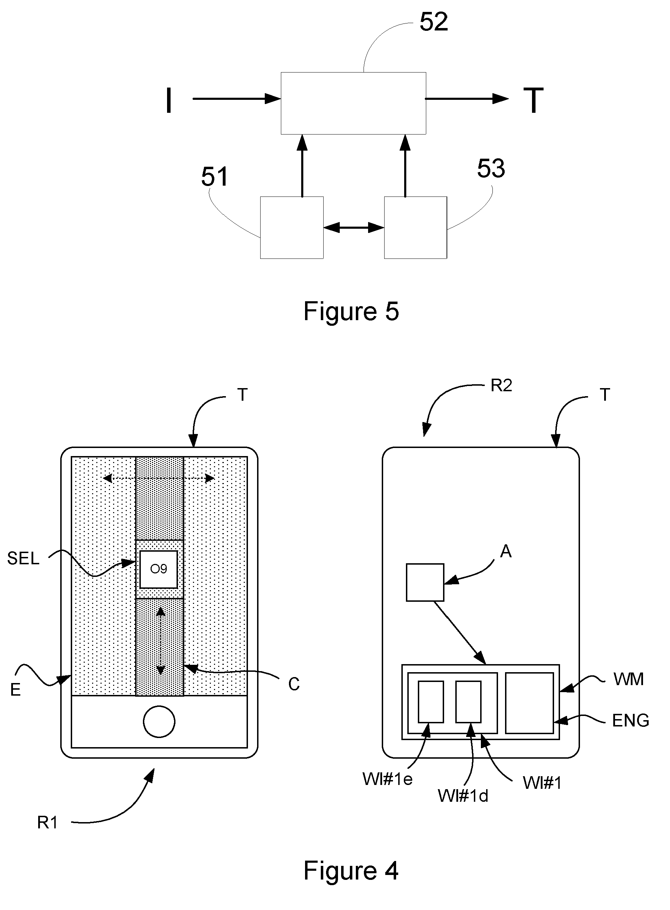

On présente dans ce mode de réalisation, en relation avec la figure 4, une mise en oeuvre du procédé de l'invention pour la sélection d'un flux de données parmi un grand nombre de flux de données disponibles, à l'aide d'un Widget de sélection de flux (widget WI#1). Pour plus de lisibilité, la figure 4 comprend une représentation R1 de l'écran (E) du terminal (T) et une représentation R2 des composants intégrés au sein du terminal (T).

Un Widget de sélection de flux est une application à part entière qui est chargée d'afficher et de proposer à l'utilisateur un ensemble de flux à visualiser. Ces flux peuvent être de type RSS (de l'anglais pour « Really Simple Syndication »), ATOM ou audio/vidéo. Un tel widget peut être capable de gérer de l'ordre d'une vingtaine de milliers de flux (dans le cas RSS/ATOM). Pour ce faire, les flux sont divisés en catégories, sous catégories, etc. afin que l'utilisateur ne soit pas perdu dans la multiplicité de flux disponibles.

La figure 4 illustre un terminal (T) permettant une mise en oeuvre du procédé tel que présenté préalablement. Comme décrit en relation avec la figure 1, un terminal (T), comprenant un écran (E) utilisé pour réaliser l'affichage des objets graphiques, comprend également un accéléromètre (A) ainsi qu'un gestionnaire de widgets WM (il s'agit donc d'un gestionnaire d'applications).

Le gestionnaire de widgets WM comprend un moteur d'exécution ENG. Ce moteur d'exécution ENG est chargé, pour un widget donné, par exemple le widget WI#1, d'utiliser une description graphique WI#1d et des instructions d'exécution WI#1e pour afficher des données à l'écran. Le moteur d'exécution ENG peut se charger de l'exécution de plusieurs widgets simultanément.

Dans ce mode de réalisation, les instructions d'exécution du widget comprennent des instructions pour l'obtention de valeurs d'inclinaison du terminal. Ces valeurs d'inclinaison sont obtenues par l'intermédiaire de l'accéléromètre (A).

Le widget WI#1 utilise les valeurs transmises par l'accéléromètre (A) pour déterminer l'angle d'inclinaison du terminal par rapport au plan de référence. L'angle est ensuite utilisé par le widget WI#1 pour déterminer les objets graphiques des flux à afficher. Ces objets graphiques peuvent soit être directement disponibles au sein du terminal, soit être obtenus auprès d'un serveur (non représenté) avec lequel le widget WI#1 entre en contact sous la forme d'un échange de données de type 'requête-réponse'.

Dans un premier temps, le widget WI#1 obtient un ensemble d'objets graphiques représentatifs de 'catégories' de flux. Ces catégories peuvent être chacune associée à un objet graphique différent. C'est par exemple le cas des catégories 'cuisine', 'auto', 'moto', 'télévision', 'immobilier', etc. dont l'icône est très représentative de la catégorie.

Lorsque l'utilisateur incline son terminal T vers la droite ou vers la gauche, les objets graphiques des catégories défilent, comme cela a déjà été explicité préalablement. Selon l'invention, lorsque l'utilisateur incline le terminal T vers le haut ou vers le bas, les objets graphiques des catégories qui sont affichés dans la zone centrale (C) de l'écran (E), défilent de manière circulaire du haut vers le bas ou du bas vers le haut.

Dans ce mode de réalisation de l'invention, l'objet graphique de la catégorie qui est affiché dans la zone de sélection (SEL) de la zone centrale (C) de l'écran (E) est la catégorie qui peut être sélectionnée par l'utilisateur. La sélection peut s'opérer soit à l'aide d'une touche du clavier du terminal si celui-ci en possède un, soit à l'aide de l'écran tactile du terminal. Dans l'exemple de la figure 4, l'objet graphique 09 est l'objet graphique qui peut être sélectionné.

Selon une caractéristique particulière de l'invention, non représentée, lorsque l'objet graphique d'une catégorie est affiché dans la zone de sélection (SEL) de la zone centrale (C) de l'écran (E), l'objet graphique de la catégorie est transformé afin d'y faire apparaître une information de niveau inférieur.

L'information de niveau inférieur, dans ce mode de réalisation particulier de l'invention, peut consister à afficher le nom des premières sous catégories qui dépendent de la catégorie sélectionnée, afin de permettre à l'utilisateur de s'assurer qu'il s'agit bien de la catégorie qu'il souhaite sélectionner.

Selon une caractéristique particulière de l'invention, également non représentée, l'information de niveau inférieur est affichée pour toutes les catégories dont l'objet graphique est affiché dans la zone centrale (C).

Dans ce mode de réalisation, la transformation de l'objet graphique comprend :
- une étape de détermination d'un nombre d'informations sélectionnées ;
- une étape de création d'un nombre équivalent d'ombres portées comprenant chacune une des informations sélectionnées ;
- une étape de superposition de la représentation initiale avec les ombres portées préalablement créées, délivrant la représentation modifiée à afficher.

Le principe, dans un mode de réalisation particulier, est de modifier la représentation de l'objet graphique, en y ajoutant par exemple une ombre portée dont la profondeur varie en fonction du nombre de niveaux d'informations à ajouter. La représentation modifiée comprend au moins une information complémentaire, correspondant à un niveau d'information déterminé (de niveau 1 ou -1 par exemple), à l'information initialement fournie, au niveau 0, par l'objet graphique.

Les caractéristiques décrites préalablement sont également applicables à la sélection et l'affichage de flux audio/vidéo. Dans ce cas, l'information de niveau inférieur qui est affichée consiste en des images, éventuellement discontinues, du flux vidéo (par exemple une image toutes les demi secondes).

Lorsque l'utilisateur à réalisé la sélection de la catégorie qui l'intéresse, le widget WI#1 charge les sous catégories associées à la catégorie sélectionnée, et le procédé de l'invention est à nouveau mis en oeuvre, jusqu'à la sélection finale, par l'utilisateur, d'un ou plusieurs flux, dont les évènements qui le composent sont enregistrés au sein du terminal. En d'autres termes, dans ce mode de réalisation, le procédé de l'invention est mis en oeuvre, au cours d'une première phase, afin de sélectionner une catégorie de flux RSS parmi la pluralité de catégories de flux RSS disponibles. Cette sélection est réalisée dans un premier temps en faisant défiler les objets graphiques représentatifs des catégories, de droite à gauche et/ou de gauche à droite, jusqu'à positionner un sous-ensemble d'objets graphique dans la zone de sélection (C) de l'écran du terminal. Puis en inclinant le terminal de haut en bas et/ou de bas en haut, un objet graphique particulier (par exemple 09) est affiché dans la zone de sélection SEL. L'utilisateur sélectionne cet objet graphique, ce qui a pour conséquence la sélection de la catégorie considérée (par exemple si l'objet graphique 09 est associé à la catégorie « automobile », alors c'est cette catégorie qui est sélectionnée). Une fois cette catégorie sélectionnée, l'ensemble des sous-catégories de flux RSS associées sont chargées, par exemple sous la forme d'un échange de données de type 'requête-réponse' avec un serveur.

Le procédé de l'invention est alors mis en oeuvre, au cours d'une deuxième phase, afin de sélectionner une sous-catégorie de flux RSS parmi la pluralité de sous-catégories de flux RSS disponibles. Une fois la sous-catégorie sélectionnée, selon le même mode opératoire que celui décrit précédemment, l'ensemble des flux RSS associés sont chargés, par exemple sous la forme d'un échange de données de type 'requête-réponse' avec un serveur et l'utilisateur peut sélectionner un ou plusieurs flux RSS particuliers.

Ce mode de réalisation de l'invention a été décrit dans un cadre applicatif (un widget WI#1 et un moteur de widget ENG). Il est bien entendu que l'objet de l'invention peut également être implémenté au coeur même des systèmes d'exploitation des terminaux.

### 5.3 Autres caractéristiques optionnelles et avantages

Selon un mode de réalisation spécifique de l'invention, représenté en relation avec la figure 2c, le défilement est mis en oeuvre sans que les objets graphiques soient supprimés de l'écran. Au contraire, dans ce mode de réalisation de l'invention, on cherche à afficher l'ensemble des objets graphiques sur l'écran. Pour ce faire lorsque le terminal est incliné, plutôt que de supprimer l'affichage de certains objets graphiques au profit d'autres, on met en oeuvre une modification de l'aspect de ces objets graphiques. Cette modification consiste, dans ce mode de réalisation présenté en relation avec la figure 2c, à réduire les tailles des objets graphiques qui ne sont pas présents dans la zone centrale (C) de l'écran (E) du terminal (T). Les objets graphiques sont réduits en fonction de la distance de la colonne dans laquelle ils se trouvent par rapport à la colonne affichée dans la zone centrale. Dans l'exemple présenté en relation avec la figure 2c, la taille des objets O1 à O4, O5 à 08 et 013 à 016 est réduite. La zone centrale (C) de l'écran est la zone dans laquelle les objets graphiques conservent leur taille standard (dans l'exemple représenté il s'agit des objets graphiques 09 à 012).

Ce mode de réalisation de l'invention présente l'avantage de ne pas déstabiliser les utilisateurs lors des premières utilisations du procédé de l'invention.

La structure du terminal est illustrée schématiquement par la figure 5. Il comprend une mémoire 51, et une unité de traitement 52 qui est équipée d'un microprocesseur piloté par un programme d'ordinateur (ou application). L'unité de traitement 52 reçoit en entrée, via un module d'interface d'entrée réseau I, des données représentatives des objets graphiques à afficher, que le microprocesseur traite, selon les instructions du programme précité, pour générer l'affichage des objets graphiques qui sont affichés à l'écran par une interface T.

## Revendications

1. Procédé de visualisation et de navigation sur un écran d'un terminal, ledit terminal comprenant un espace d'affichage sur lequel est affiché une première pluralité d'objets graphiques représentatifs d'objets applicatifs, les dits objets étant regroupés en sous-ensembles, procédé **caractérisé en ce qu'**il comprend :
- une étape d'obtention d'au moins une donnée d'inclinaison dudit terminal par rapport à un plan de référence ;
- une étape de déplacement en continu des sous-ensembles sur ledit espace d'affichage en fonction de ladite donnée d'inclinaison obtenue, tant que ladite donnée d'inclinaison excède un seuil prédéterminé.

2. Procédé selon la revendication 1, **caractérisé en ce que** ladite étape de déplacement en continu des sous-ensembles comprend :
- une étape de sélection, parmi ladite première pluralité d'objets graphiques affichée, d'au moins un premier sous-ensemble d'objets graphiques à déplacer, en fonction de ladite donnée d'inclinaison obtenue ;
- une étape de sélection, parmi une deuxième pluralité d'objets graphiques, d'au moins un deuxième sous-ensemble d'objets graphiques à afficher, en fonction de ladite donnée d'inclinaison obtenue ;
- une étape d'affichage dudit au moins un premier sous ensemble et dudit au moins un deuxième sous ensemble par déplacement en continu des objets graphiques desdits premier et deuxième sous-ensembles sur ledit espace d'affichage en fonction de ladite donnée d'inclinaison obtenue.

3. Procédé selon la revendication 2, **caractérisé en ce qu'**il comprend en outre une étape d'insertion, au sein de ladite deuxième pluralité d'objets graphiques, d'au moins certains objets graphiques dudit au moins un premier sous-ensemble d'objets graphiques préalablement déplacé.

4. Procédé selon la revendication 1, **caractérisé en ce qu'**il comprend en outre une étape de transformation d'une représentation initiale d'au moins un objet graphique en une représentation modifiée lorsque le déplacement dudit au moins un objet graphique provoque son affichage dans une zone prédéterminée dudit espace d'affichage.

5. Procédé selon la revendication 4, selon lequel ladite étape de transformation comprend une étape de substitution de ladite représentation initiale par une représentation modifiée comprenant au moins une image d'un flux audio/vidéo auquel ledit objet graphique est associé.

6. Procédé selon la revendication 4, selon lequel ladite étape de transformation comprend :
- une étape de détermination d'un nombre d'informations sélectionnées ;
- une étape de création d'un nombre équivalent d'ombres portées comprenant chacune une desdites informations sélectionnées ;
- une étape de superposition de ladite représentation initiale avec lesdites ombres portées préalablement créées, délivrant ladite représentation modifiée.

7. Dispositif de visualisation et de navigation sur un écran d'un terminal, ledit terminal comprenant un espace d'affichage sur lequel est affiché une première pluralité d'objets graphiques représentatifs d'objets applicatifs, les dits objets étant regroupés en sous-ensembles, dispositif **caractérisé en ce qu'**il comprend :
- des moyens d'obtention d'au moins une donnée d'inclinaison dudit terminal par rapport à un plan de référence ;
- des moyens de déplacement en continu des sous-ensembles sur ledit espace d'affichage en fonction de ladite donnée d'inclinaison obtenue, tant que ladite donnée d'inclinaison excède un seuil prédéterminé.

8. Dispositif selon la revendication 1, **caractérisé en ce que** lesdits moyens de déplacement en continu des sous-ensembles comprend :
- des moyens de sélection, parmi ladite première pluralité d'objets graphiques affichée, d'au moins un premier sous-ensemble d'objets graphiques à déplacer, en fonction de ladite donnée d'inclinaison obtenue ;
- des moyens de sélection, parmi une deuxième pluralité d'objets graphiques, d'au moins un deuxième sous-ensemble d'objets graphiques à afficher, en fonction de ladite donnée d'inclinaison obtenue ;
- des moyens d'affichage dudit au moins un premier sous ensemble et dudit au moins un deuxième sous ensemble par déplacement en continu des objets graphiques desdits premier et deuxième sous-ensembles sur ledit espace d'affichage en fonction de ladite donnée d'inclinaison obtenue.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de visualisation et de navigation selon l'une au moins des revendications 1 à 6, lorsqu'il est exécuté sur un ordinateur.
